# EUROPEAN PATENT APPLICATION

(11) **EP 1 571 672 A1**
(43) Date of publication of application: **07.09.2005**
(21) Application number: 05250964.3
(22) Date of filing: 21.02.2005
(51) Int. Cl.: G11B 27/10, G11B 27/34, H04N 5/445, G06F 17/30

(54) **Apparatus and method for reproducing image**

(30) Priority: 05.03.2004 JP 2004062743
(71) Applicant: SONY CORPORATION, Tokyo (JP)
(72) Inventor: Matsumoto, Toshihiko, Sony Corporation, Tokyo (JP)
(74) Representative: Leppard, Andrew John

(57) **Abstract**

An apparatus reproduces an image recorded with difference between adjacent frames at a scene change point and scaled-down images for searching the scene change points. Time-length-determining device determines a length of time to display the scaled-down images corresponding to a frame length of a screen of the displaying device. Image-number-determining device determines number of the scaled-down images to be displayed during the length of time. Threshold-value-setting device sets a threshold value on the difference recorded during the length of time to allow to be extracted the number of the scaled-down images corresponding to the number determined by the image-number-determining device. Controlling device controls operations of displaying device to reproduce and display the scaled-down images corresponding to the scene change point and having at least the difference between adjacent frames of the threshold value set by the threshold-value-setting device with the scaled-down image being synchronized with each of the image.

## Description

The present invention relates to an apparatus and a method for reproducing an image.

In the past, proposed have been many kinds of methods for reproducing an image of interest rapidly by displaying scaled-down images (thumbnail images) created from a first frame image in each scene or the like as an index for searching the image of interest.

Alternatively, in order to display thumbnail images as an index for searching the image of interest, such a method for recording an image has been known as to take brightness histograms of plural frames forming a moving image on recording images (moving images); if difference of the histograms between a current frame and a previous frame exceeds a predetermined threshold value, to determine that a scene has been changed; and to generate the thumbnail images from frames representative of this scene and record the thumbnail images with their scene change points.

When reproducing the images recorded on a recording medium such as a digital versatile disc (DVD) as contents according to such the past image-recording method, each image is reproduced starting at the scene change point corresponding to a start point of the scene if a thumbnail image for the scene of interest is selected from plural thumbnail images, which are reproduced and displayed as an index for searching the image of interest. Thus, only selecting the thumbnail image allows the scene of interest to be viewed from its start point, thereby grasping the contents in the scene (see Japanese Patent Application Publication No. 2002-27411).

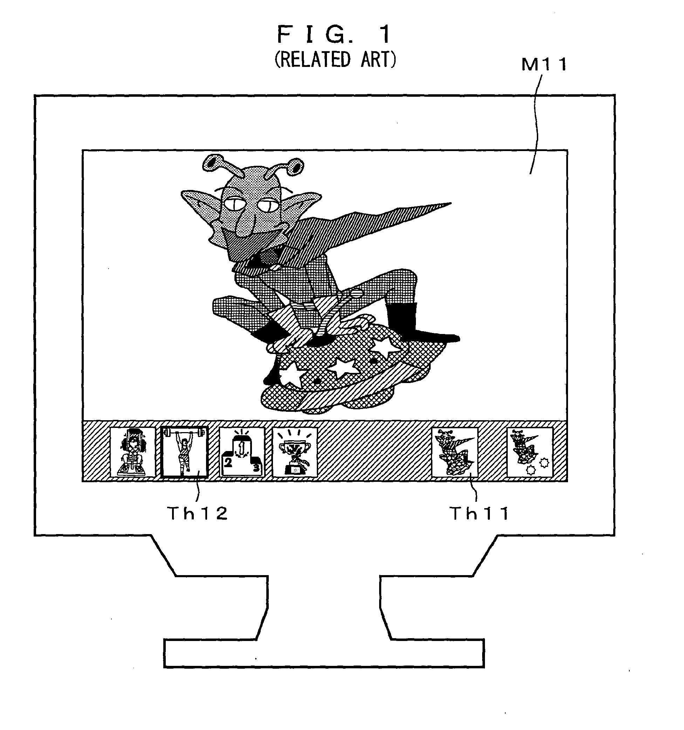

As shown in Fig. 1, thumbnail images Th each for searching the image of interest and a reproduced image M11 are displayed on the same screen with each of the thumbnail images Th and the image M11 being synchronized with each other, so that scenes before and after the reproduced image M11 can be viewed preceding fast-forward or reverse movement, thereby making it convenient for a user to perform the fast-forward or reverse movement. In a case where an image is reproduced, as shown in Fig. 1, even if the image M11 is being reproduced by selecting the thumbnail image Th11, it is possible to change the reproduction start point promptly by selecting the thumbnail Th12, for example. Thus, any scene recorded before the reproduced image M11 has been recorded can be reproduced and displayed rapidly, thereby enhancing its convenience.

Processing in an application such that an image (a video image) and the thumbnail images in contents are displayed with them being synchronized with each other is subject to a large load on a CPU. This may require a CPU having a large operation speed. An embedded apparatus such that a device for recording/reproducing an image (for example, a video device) is incorporated into a television receiver or the like uses often a CPU having a relatively slow operation speed. Thus, it may be difficult to reproduce and display all the thumbnail images, which have been recorded in a recording medium as contents together with the video images, with each of the thumbnail images being synchronized with the video image.

If such the CPU having a relatively slow operation speed is used, it is necessary to take processed time of about one second in order to reproduce and display the thumbnail images each having 100 pixels. Thus, when reproducing and displaying the thumbnail images by taking a horizontal scanning direction of an image display screen as a time axis, it is possible to display five through seven thumbnail images with each of them being synchronized with the video image if each thumbnail image has about 120 pixels.

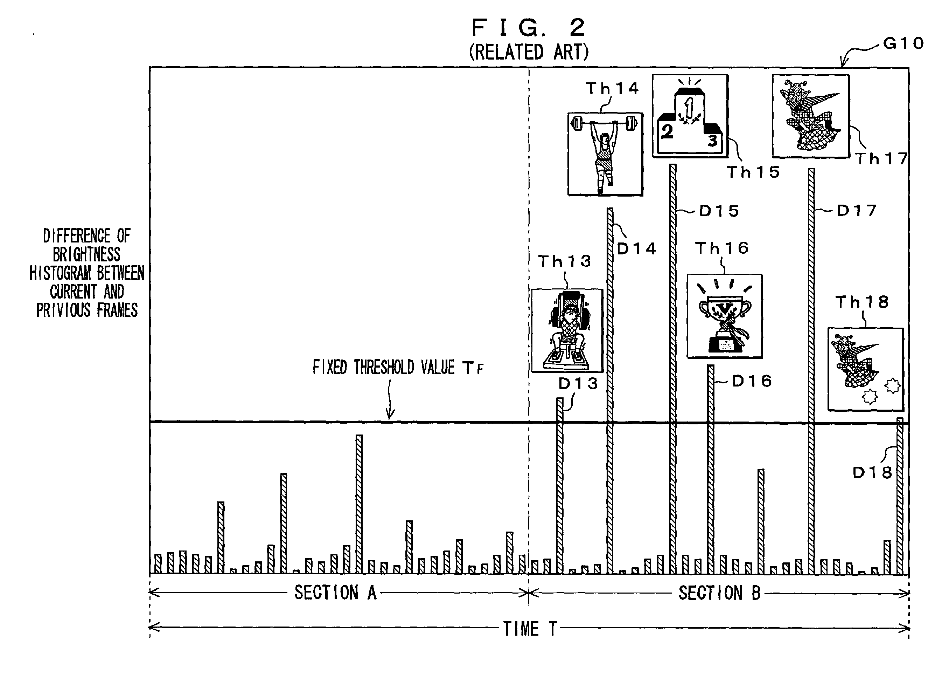

Fig. 2 shows a graph G10 where a fixed threshold value is set for selecting number of the thumbnail images capable of being displayed from all of the recorded thumbnail images. In Fig. 2, the horizontal axis is taken as time T and the vertical axis is taken as a difference of brightness histogram between the current frame and the previous frame so that the differences therebetween of scene change points are illustrated.

If six thumbnail images, for example, capable of being displayed are selected from all of the thumbnail images recorded as contents during the time T, it is conceivable that a fixed threshold value TF is set to any differences of the brightness histograms in the graph G10 of Fig. 2 and the thumbnail images Th13 through Th18 corresponding to the differences D13 through D18 that exceed the fixed threshold value TF are extracted. Avoiding reproducing and displaying the thumbnail images corresponding to the differences that not exceed the fixed threshold value TF enables to be reduced the number of the thumbnail images capable of being displayed on the screen with each of them being synchronized with the video image. This allows loads on CPU to be decreased.

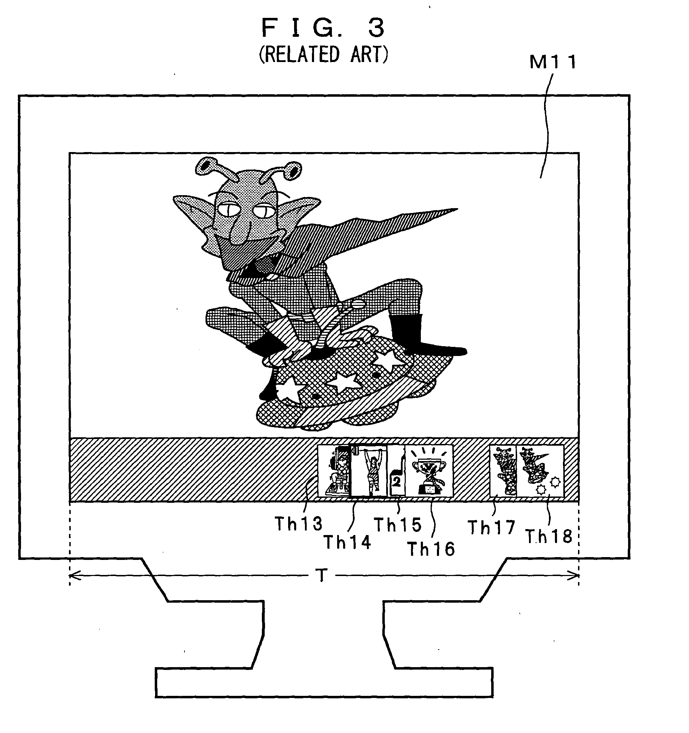

If, however, a fixed threshold value TF is set over the whole of the contents to limit number of the thumbnail images, the contents may include a section A wherein there are only low difference values (scene change levels) and a section B wherein there are high difference values, as shown in Fig. 2. The thumbnail images can be extracted from the section B, but no thumbnail images can be extracted from the section A. Therefore, as shown in Fig. 3, when reproducing and displaying the thumbnail images corresponding the time length T to a horizontal frame length of the display screen, the thumbnail images Th13 through Th18 are densely displayed in a latter half of the time length T.

When many scene changes occur so that plural thumbnail images can be displayed in a short time, the thumbnail images are overlapped each other. Thus, the thumbnail images such as Th13, Th14, Th15, and Th17 can be partially displayed. In particular, it is difficult to grasp the contents of the scene from the thumbnail image, like the thumbnail image Th15, a large part of which is covered by the other thumbnail image Th16, and select the scene of interest.

If a single fixed threshold value TF is set, number of the thumbnail images to be displayed can be reduced during a period of time when the scenes are frequently changed so that load on CPU can be reduced. During a period of time when the scenes are gently changed, no thumbnail image may be displayed according to a level of the fixed threshold value TF, though it is possible to display the more numbers of thumbnail images based on processing power of CPU. Thus, according to unbalance of the numbers of scene change points, there is an issue that unevenness in time to display the thumbnail images occurs.

It is desirable to provide an apparatus and a method for reproducing an image or the like by which loads on the thumbnail image display processing is reduced and unevenness in time to display the thumbnail images according to unbalance of the numbers of scene change points decreases.

Embodiments of the present invention relate to an apparatus and a method for reproducing an image of interest by displaying scaled-down images created from images and selecting one(s) from the scaled-down images.

According to an embodiment of the present invention, there is provided an apparatus for reproducing an image. The image is recorded with difference between adjacent frames at a scene change point and a scaled-down image for searching the scene change point. The apparatus has time-length-determining device that determines a length of time to display the scaled-down image corresponding to a frame length of a screen that displaying device has. The apparatus also has image-number-determining device that determines number of the scaled-down image displayed during the length of time determined by the time-length-determining device. The apparatus further has threshold-value-setting device that sets a threshold value on the difference between the adjacent frames. This difference is recorded during the length of time. This allows to be extracted the number of the scaled-down image corresponding to the number of the scaled-down image determined by the image-number-determining device. The apparatus also has controlling device. The controlling device controls operation of the displaying device to reproduce and display the scaled-down image corresponding to the scene change point with the scaled-down image being synchronized with the image. The scaled-down image has at least the difference between adjacent frames of the threshold value set by the threshold-value-setting device.

In the embodiment of the present invention, when reproducing an image recorded with difference between adjacent frames at a scene change point and a scaled-down image for searching the scene change point, time-length-determining device determines a length of time to display the scaled-down image(s) corresponding to a frame length of a screen in which the image is reproduced and displayed. The image-number-determining device determines number of the scaled-down image(s) to be displayed during the length of time thus determined. The threshold-value-setting device then sets threshold value(s) on the difference(s) between the adjacent frames recorded during the length of time, thereby allowing to be extracted the number of the scaled-down image(s) corresponding to the number of the scaled-down image(s) determined by the image-number-determining device. The controlling device controls operation(s) of the displaying device to reproduce and display the scaled-down image(s) corresponding to the scene change point(s) with each of the scaled-down image(s) being synchronized with the image. The scaled-down image(s) has (have) at least the difference between adjacent frames of the threshold value(s) set by the threshold-value-setting device.

Thus, only the scaled-down image(s) corresponding to the scene change point(s) and having at least the difference between adjacent frames of the set threshold value(s) can be reproduced and displayed with each of the scaled-down image(s) being synchronized with the image. As compared with a case where reproducing and displaying all the recorded scaled-down images, this allows loads on display process of the scaled-down image(s) to be reduced. It also allows unevenness in time to display the scaled-down image(s) based on unbalance of the numbers of scene change points to decrease.

Alternatively, according to an embodiment of the present invention, there is provided a method for reproducing an image. The image is recorded with difference between adjacent frames at a scene change point and a scaled-down image for searching the scene change point. The method also includes a step of determining a length of time to display the scaled-down image corresponding to a frame length of the screen in which the image is reproduced and displayed. The method also includes a step of determining number of the scaled-down image displayed during the determined length of time. The method further includes a step of setting a threshold value on the difference between the adjacent frames. The difference is recorded during the length of time. This allows to be extracted the number of the scaled-down image corresponding to the determined number of the scaled-down image. The method further includes a step of reproducing and displaying the scaled-down image corresponding to the scene change point with the scaled-down image being synchronized with the image. The scaled-down image has at least the difference between adjacent frames of the set threshold value.

According to an embodiment of the present invention, there is provided a computer program product for allowing a computer to execute a method for reproducing an image. The image is recorded with difference between adjacent frames at a scene change point and a scaled-down image for searching the scene change point. The method includes a step of determining a length of time to display the scaled-down image corresponding to a frame length of the screen in which the image is reproduced and displayed. The method also includes a step of determining number of the scaled-down image displayed during the determined length of time. The method further includes a step of setting a threshold value on the difference between the adjacent frames. The difference is recorded during the length of time. This allows to be extracted the number of the scaled-down image corresponding to the determined number of the scaled-down image. The method still further includes a step of reproducing and displaying the scaled-down image corresponding to the scene change point with the scaled-down image being synchronized with the image. The scaled-down image has at least the difference between adjacent frames of the set threshold value.

In these embodiments of the present invention, by the method for reproducing the image and the computer program product for allowing a computer to execute this method, only the scaled-down image(s) corresponding to the scene change point(s) and having at least the difference(s) between adjacent frames of the set threshold value(s) can be reproduced and displayed with each of the scaled-down image(s) being synchronized with the image. As compared with a case where reproducing and displaying all the recorded scaled-down images, this allows loads on display process of the scaled-down image(s) to be reduced. It also allows unevenness in time to display the scaled-down image(s) based on unbalance of the numbers of scene change points to decrease.

According to these embodiments of the apparatus, the method and the like of the invention, in order to reproduce an image recorded with difference(s) between adjacent frames at scene change point(s) and scaled-down image(s) for searching the scene change point(s), determining a length of time to display the scaled-down image(s) corresponding to a frame length of a screen on which the image is reproduced and displayed, determining number(s) of the scaled-down image(s) displayed during the length of time thus determined, and setting threshold value(s) on the difference(s) between the adjacent frames that is (are) recorded during the determined length of time allows to be extracted the number of the scaled-down image(s) corresponding to the determined number(s) of the scaled-down image(s).

By the above configuration, only the scaled-down image(s) corresponding to the scene change point(s) and having at least the difference between adjacent frames of the set threshold value(s) can be reproduced and displayed with each of the scaled-down images being synchronized with the image. As compared with a case where reproducing and displaying all the recorded scaled-down images, this allows loads on display process of the scaled-down image(s) to be reduced. Thus, even in an image-processing system having a low operation speed, it is possible to reproduce and display on one screen the limited number of scaled-down image(s) as an index for searching a reproduction start point with each of the limited scaled-down images being synchronized with the image. This allows to be presented an inexpensive apparatus for reproducing an image as compared with the past one.

According to those embodiment of the apparatus, the method and the like of the invention, it is possible to set the threshold value variably according to the length of time to be recorded in which the scaled-down image(s) is (are) displayed. This allows a fixed number of the scaled-down image(s) to be reproduced and displayed with it (each of them) being synchronized with the image irrespective of unbalance of the numbers of scene change points. Thus, it allows unevenness in time to display the scaled-down image(s) based on unbalance of the numbers of scene change points to decrease.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a conceptual illustration for roughly illustrating an example of image reproduction (No. 1);
Fig. 2 is a conceptual illustration for roughly illustrating an example of setting a fixed threshold value;
Fig. 3 is a conceptual illustration for roughly illustrating an example of image reproduction (No. 2);
Fig. 4 is a block diagram for showing a configuration of an embodiment of an apparatus for reproducing an image according to the invention;
Fig. 5 is a block diagram for showing a configuration of an embodiment of hardware of an apparatus for reproducing an image according to the invention;
Fig. 6 is a conceptual illustration for roughly illustrating an example of setting fixed threshold values according to an embodiment of the invention;
Fig. 7 is a conceptual illustration for roughly illustrating an example of displaying thumbnail images according to an embodiment of the invention;
Fig. 8A is a flowchart (No. 1) for showing an embodiment of a method for reproducing an image according to the invention; and
Fig. 8B is a flowchart (No. 2) for showing an embodiment of a method for reproducing an image according to the invention.

Referring to the drawings, the invention will now be described in detail with reference to preferred embodiments of an apparatus and a method for reproducing an image, and a computer program product for allowing a computer to execute the method for reproducing the image.

In a preferred embodiment thereof, threshold value(s) is (are) set on differences between the adjacent frames recorded during a length of time corresponding to a frame length of a screen in which the image is reproduced and displayed so that the number of the scaled-down images corresponding to the number of the scaled-down images to be displayed during the length of time can be extracted. Thus, only the scaled-down images corresponding to the scene change points and having at least the difference between adjacent frames of the set threshold value can be reproduced and displayed with each of the scaled-down images being synchronized with the image.

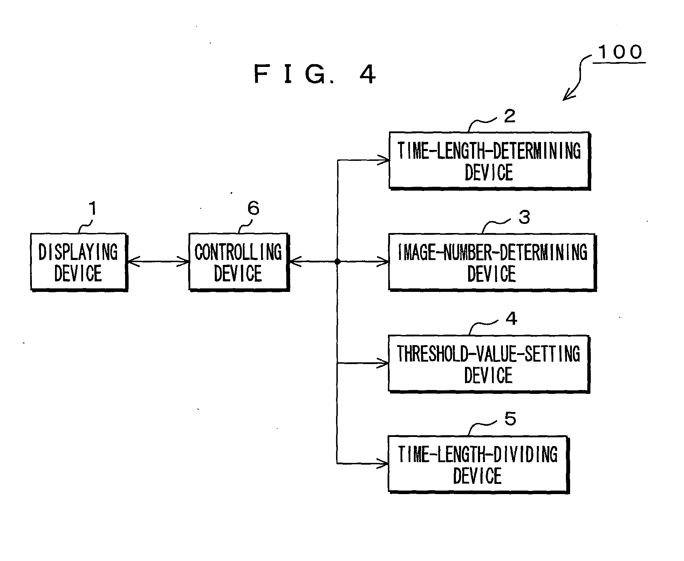

Fig. 4 shows a configuration of an embodiment of an apparatus 100 for reproducing an image according to the invention. The apparatus 100 reproduces an image (a video image) recorded with difference between adjacent frames at a scene change point and scaled-down images (thumbnail images) each for searching the scene change point. The apparatus 100 has a displaying device 1, a time-length-determining device 2, an image-number-determining device 3, a threshold-value-setting device 4, a time-length-dividing device 5, and a controlling device 6, as shown in Fig. 4.

The displaying device 1 is connected with the controlling device 6 and reproduces and displays the video image on a screen under control of this controlling device 6. The time-length-determining device 2 determines a length of time to display the thumbnail images corresponding to a frame length of a screen the displaying device 1 has, under control of this controlling device 6. The image-number-determining device 3 is connected with the controlling device 6 and determines number of the thumbnail images to be displayed during the length of time determined by the time-length-determining device 2.

The threshold-value-setting device 4 is connected with the controlling device 6 and sets threshold value(s) on the difference(s) between the adjacent frames which is (are) recorded during the length of time determined by the time-length-determining device 2, so that the number of the thumbnail images corresponding to the number of the thumbnail images determined by the image-number-determining device 3 can be extracted.

In this embodiment, frames having difference of brightness histogram between a current frame and a preceding frame that exceeds a predetermined standard (a threshold value) are determined as scene change points. Difference between a frame in connection with the scene change point and a preceding frame is then used as the difference between adjacent frames. Thus, the threshold-value-setting device 4 sets a threshold value that can vary dynamically to brightness difference between a current frame at the scene change point and a preceding frame.

The time-length-dividing device 5 is connected with the controlling device 6 and further divides the length of time determined by the time-length-determining device 2. If the time-length-dividing device 5 divides the length of time, the image-number-determining device 3 determines number of the thumbnail images to be displayed during the length of time divided by the time-length-dividing device 5 and the threshold-value-setting device 4 sets threshold value(s) on the brightness differences which are recorded during the length of time divided by the time-length-dividing device 5.

The controlling device 6 is connected with the displaying device 1, the time-length-determining device 2, the image-number-determining device 3, the threshold-value-setting device 4, and the time-length-dividing device 5, respectively. The controlling device 6 controls operations of the displaying device 1 to reproduce and display the thumbnail images corresponding to the scene change points and having at least the difference between adjacent frames of the threshold value set by the threshold-value-setting device 4 with each of the thumbnail images being synchronized with the video image.

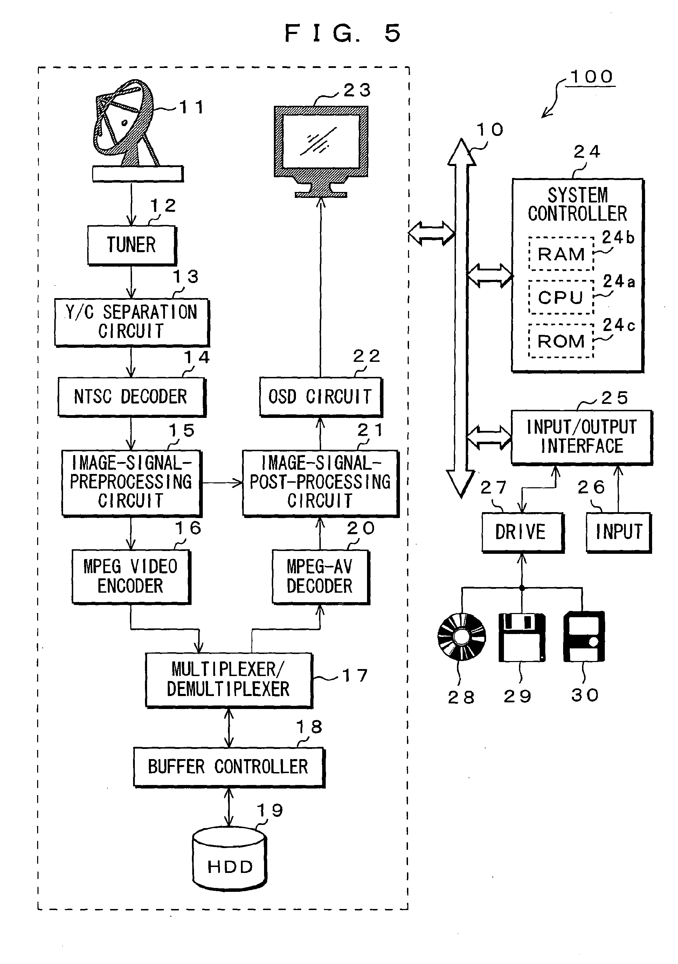

For example, an embodiment of the apparatus 100 thus configured that reproduces an image according to the invention is implemented by incorporating it into a hardware configuration shown in Fig. 5. In the apparatus 100, an antenna 11 refers to as a well-known receiving antenna for a television broadcast signal and is connected with a tuner 12. The antenna 11 receives a signal of an optional television broadcast wave and transmits this received signal to the tuner 12.

The tuner 12 is connected with the antenna 12 and a Y/C separation circuit 13. The tuner 12 tunes a received signal of television broadcast waves that received from the antenna 11 to a desired channel signal and transmits this channel signal to the Y/C separation circuit 13.

The Y/C separation circuit 13 is connected with the tuner 12 and a national TV standard committee (NTSC) decoder 14. The circuit 13 separates to brightness signal (Y signal) and a color signal (C signal) an image signal in the channel signal that received from the tuner 12 and transmits the separated image signal to the NTSC decoder 14.

The NTSC decoder 14 is connected with the Y/C separation circuit 13 and an image-signal-preprocessing circuit 15. The decoder 14 performs A/D conversion process, chroma-encoding process and the like on the image signal received from the Y/C separation circuit 13 and converts the signal thus performed to digital component video signal (hereinafter referring to as "DCV signal") to transmit the DCV signal to the image-signal-preprocessing circuit 15.

The image-signal-preprocessing circuit 15 is connected with the NTSC decoder 14, a moving picture coding experts group (MPEG) video encoder 16, and an image-signal-post-processing circuit 21, respectively. The circuit 15 produces brightness histogram of each field from the DCV signal that is received from the NTSC decoder 14 and searches any scene change points in which the histogram difference between timely adjacent frames exceeds a predetermined standard to transmit the image data of the frame at this scene change point to the image-signal-post-processing circuit 21.

The image-signal-preprocessing circuit 15 also transmits DCV signal to the MPEG video encoder 16 together with the image data of the frame at this scene change point.

The MPEG video encoder 16 is connected with the image-signal-preprocessing circuit 15 and a multiplexer/demultiplexer 17, respectively. The encoder 16 performs an encoding process such as discrete cosine transform (DCT) on the DCV signal that is received from the image-signal-preprocessing circuit 15 and produces an image packetized elementary stream (an image PES) based on the MPEG standard to transmit the image PES to the multiplexer/demultiplexer 17.

The multiplexer/demultiplexer 17 is connected with the MPEG video encoder 16, a buffer controller 18, an MPEG-AV decoder 20, an MPEG audio encoder, which is not shown, and the like, respectively.

When recording the video image, the multiplexer/demultiplexer 17 performs multiplexing process on the image PES, audio PES, various kinds of control signals or the like that are received from the MPEG video encoder 16, the MPEG audio encoder, and the like to produce a transport stream based on the MPEG standard, and transmits the transport stream to the buffer controller 18.

When reproducing the video image, the multiplexer/demultiplexer 17 also performs demultiplexing process on the transport stream received from the buffer controller 18 to separate the image PES and audio PES therefrom and transmits these separated PESs to the MPEG-AV decoder 20.

The buffer controller 18 is connected with the multiplexer/demultiplexer 17 and a hard disk drive (HDD) 19, respectively. The buffer controller 18 intermittently transmits the transport stream received successively from the multiplexer/demultiplexer 17 to control the HDD 19 so that it can be recorded on the HDD 19. The buffer controller 18 also successively transmits the transport stream read out of the HDD 19 to the multiplexer/demultiplexer 17 by controlling, in the buffer, data intermittently received from the HDD 19 so that the data can be combined with each other.

The HDD 19 is connected with the buffer controller 18. The HDD 19 records the transport stream received intermittently from the buffer controller 18 on a set address thereof and read the transport stream recorded out of the set address to transmit it to the buffer controller 18.

The MPEG-AV decoder 20 is connected with the multiplexer/demultiplexer 17 and the image-signal-post-processing circuit 21, respectively. The decoder 20 separates PESs received from the multiplexer/demultiplexer 17 into image PES and audio PES to perform a desired decoding process on the image PES and the audio PES, and then transmits image data of base band to the image-signal-post-processing circuit 21 and audio data of base band to an audio-signal-processing circuit, which is not shown, respectively.

The image-signal-post-processing circuit 21 is connected with the image-signal-preprocessing circuit 15, the MPEG-AV decoder 20, and an on-screen-display (OSD) circuit 22, respectively. The image-signal-post-processing circuit 21 performs a compressing process on image data at each scene change point that is received from the image-signal-preprocessing circuit 15 to produce any thumbnail images. The image-signal-post-processing circuit 21 then produces an image display window or the like as graphic user interface (GUI) and incorporates the thumbnail images into the image display window so that they can be displayed to transmit them to the OSD circuit 22 together with the image data of base band received from the MPEG-AV decoder 20.

The OSD circuit 22 is connected with the image-signal-post-processing circuit 21 and a display 23, respectively. The OSD circuit 22 superimposes the image display window into which the thumbnail images are incorporated in the image-signal-post-processing circuit 21 on the image data of base band and transmits them to the display 23.

The display 23 is illustrated as a liquid crystal display (LCD) having an image display function and is connected with the OSD circuit 22. The display 23 reproduces and displays the thumbnail images as index for searching an image on a screen thereof with the thumbnail images being superimposed on a video image, by changing its display based on the image data received from the OSD circuit 22.

The above units are respectively connected with a system controller 24 through a bus 10 so that the system controller 24 can control their operations. An input/output interface 25 is also connected with the bus 10.

The system controller 24 includes a central processing unit (CPU) 24a, a random access memory (RAM) 24b, and a read only memory (ROM) 24c. The system controller 24 executes a control program stored in the ROM 24c with the RAM 24b being used as a working area, so that the system controller 24 can control the operations of the units in the apparatus 100 for reproducing the image through the bus 10.

The input/output interface 25 is connected with an input unit 26, a drive unit 27, and the bus 10, respectively. The input unit 26 is illustrated as a keyboard, a mouse, a remote controller, and a transparent touch panel incorporated into the screen of the display 23. The input unit 26 functions as a user interface for operating the apparatus 100 for reproducing the image. Thus, the input/output interface 25 transmits input from the input unit 26 to the system controller 24.

The drive unit 27 is connected with the input/output interface 25. In drive unit 27, an optical recording medium 28 such as CD-ROM and DVD, magnetic recording medium 29 such as a floppy disk, or a semiconductor memory 30 such as memory stick is inserted to read the data therefrom. Thus, the drive unit 27 can read the recorded data out of the recording medium 28, 29, 30, so that the read data is supplied to the system controller 24 through the input/output interface 25.

Thus, the apparatus 100 for reproducing the image can reproduce and display various kinds of contents such as moving picture recorded on the optical recording medium 28, the magnetic recording medium 29, the semiconductor memory 30 in addition to an image of the television broadcast received via the antenna 12 and an image read out of the HDD 19.

The following will be described on a relationship between the block diagrams shown in Figs. 4 and 5. In the embodiment of the apparatus 100 for reproducing the image, the image-signal-preprocessing circuit 15, the image-signal-post-processing circuit 21, the OSD circuit 22, and the display 23 function as the displaying device 1.

The ROM 24c previously stores an embodiment of a program according to the invention. The CPU 24a executes the program stored in the ROM 24c, so that it can function as the time-length-determining device 2, the image-number-determining device 3, the threshold-value-setting device 4, the time-length-dividing device 5, and the controlling device 6. The CPU 24a, the RAM 24b, and the ROM 24c can be implemented using a well-known computer system.

If power is supplied to the apparatus 100 for reproducing the image that has such the configuration and a user operates the apparatus 100 via the input unit 26 such as the remote controller to select contents stored on the HDD 19, for example, and reproduce it, in connection with the contents selected by the remote controller, the time-length-determining device 2 determines a length of time T for displaying the thumbnail images corresponding to a frame length of a screen in which video image is reproduced and displayed, in order to reproduce and display the thumbnail images each for searching a scene change point with each of the thumbnail images being synchronized with the video image.

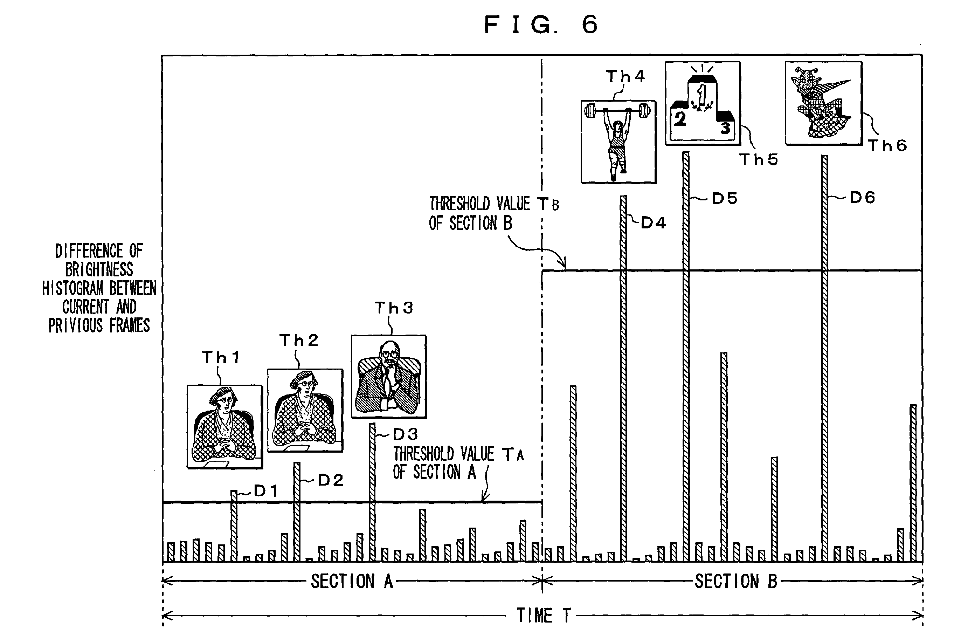

Next, the time-length-dividing device 5 divides the length of time T by two sections so that a length of time "t" (t=T/2), which is shorter than the length of time T, can be determined. As shown in Fig. 6, the contents are divided into two sections, section A and section B, which have the same length of time "t". The image-number-determining device 3 then determines numbers of the thumbnail images, for example, three images, to be displayed during the length of time "t".

The threshold-value-setting device 4 detects scene change levels at scene change points recorded during each section on the contents thus divided into two sections A and B. All the scene change points are sorted in ascending order of the scene change levels. Thereby, the threshold-value-setting device 4 can set a threshold value on the scene change levels recorded during the length of time "t" so that three thumbnail images corresponding to the number of thumbnail images determined by the image-number-determining device 3 can be extracted.

In the section A, the threshold-value-setting device 4 sets a threshold value TA on the scene change levels recorded during the section A so that difference between current and previous frames having a third highest scene change point in the section A is included. This allows to be executed the thumbnail images Th1, Th2, and Th3 corresponding to the third highest scene change level D1 through the highest scene change point D3.

Similarly, in the section B, the threshold-value-setting device 4 sets a threshold value TB on the scene change levels recorded during the section B so that difference between current and previous frames having a third highest scene change point in the section B is included. This allows to be executed the thumbnail images Th5, Th6, and Th4 corresponding to the highest scene change point D5, the next highest scene change point D6, and the third highest scene change level D4, respectively.

Thus, dynamically changing the threshold values according to the scene change levels recorded during each of the sections A and B having the length of time "t" allows to be executed three thumbnail images for each of the sections A and B. Such the reproduction processing with a total of six thumbnail images being respectively synchronized with the video image can be carried out by even a low speed CPU without any problems. A relatively low speed CPU for an embedded system, for example, a CPU having operating speed of about 300 MHz, can execute such the reproduction processing with each of the thumbnail images being synchronized with the video image. This allows to be presented an inexpensive apparatus for reproducing an image.

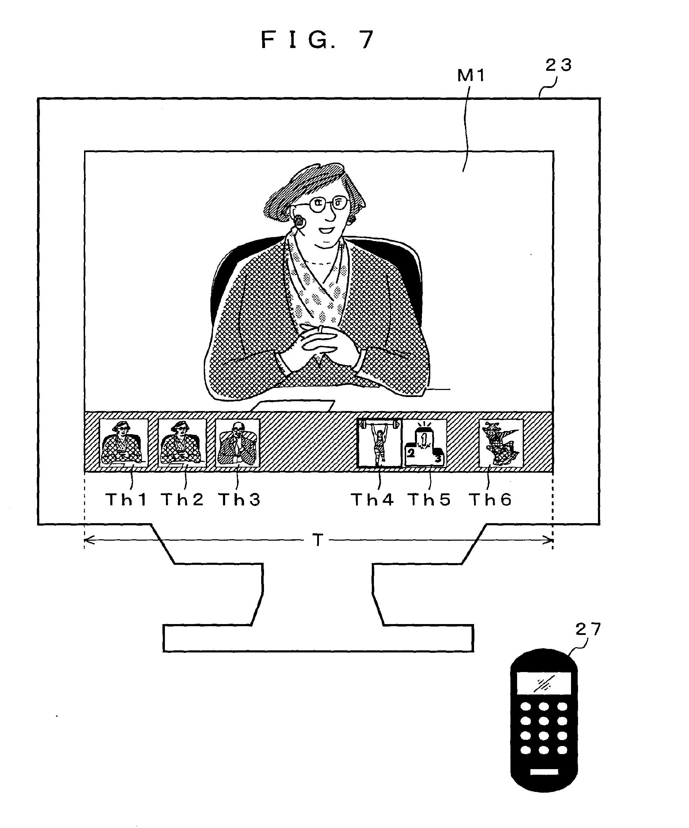

Fig. 7 roughly illustrates an example of displaying the thumbnail images that are extracted according to the above methods. When the length of time T corresponds to a horizontal frame length of a screen the display 23 has, as shown in Fig. 7, the thumbnail images Th1, Th2, and Th3 corresponding to the scene change points D1, D2, and D3, respectively, that exceed the threshold value TA during the section A and the thumbnail images Th4, Th5, and Th6 corresponding to the scene change points D4, D5, and D6, respectively, that exceed the threshold value TB during the section B can be reproduced and displayed on the same screen with them being synchronized with the video image M1.

Thus, on the example of displaying the thumbnail images shown in Fig. 7, in even the section A where a few scene changes occur such that a news caster announces the news, a low threshold value TA is set according to the scene change levels, so that the thumbnail images Th1, Th2, and Th3 of the news caster can be displayed. As compared by a case where fixed one threshold value TF is set, this allows unevenness in time to display the thumbnail images based on unbalance of the numbers of scene change points according to a variation of the scene change levels to decrease.

On the other hands, in the section B where many scene changes occur, a high threshold value TB is set so that limited numbers of the thumbnail images can be displayed. This prevents plural thumbnail images from being displayed with them being overlapped. Thus, proper number of the thumbnail images is displayed according to recording situation of the contents, so that a user can know the contents of the scene corresponding to each thumbnail image.

For example, the user can know reproduction position in the contents based on the thumbnail image Th2 with him or her viewing the video image M1 to be being reproduced. Alternatively, by selecting the thumbnail image Th4 by the drive unit 27 such as the remote controller, it is possible to change the reproduction start position thereof to the scene change point corresponding to the this thumbnail image Th4, thereby obtaining an excellent operation quality in forward or reverse reproduction, for example, to enhance customer convenience.

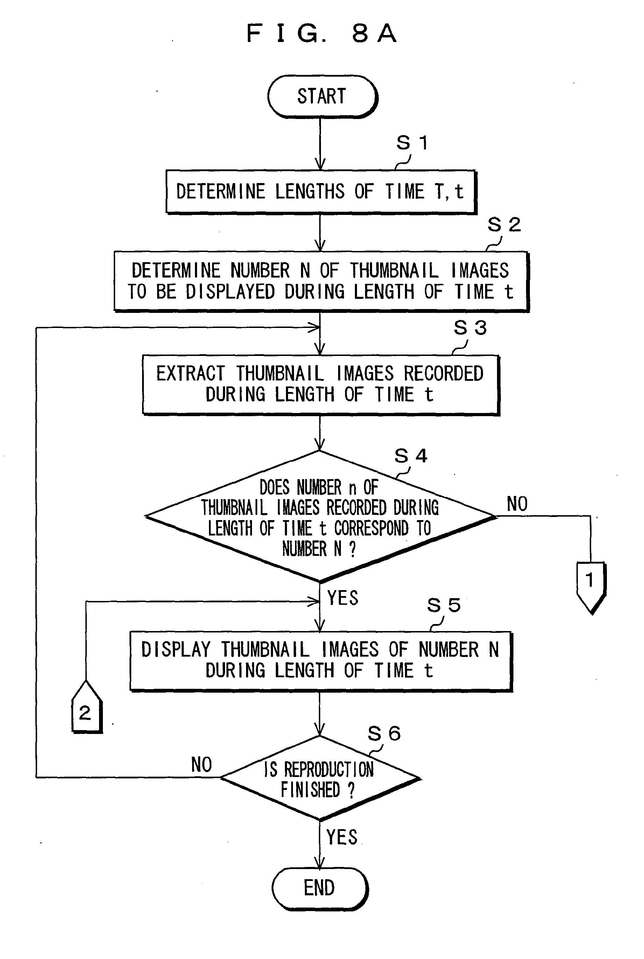

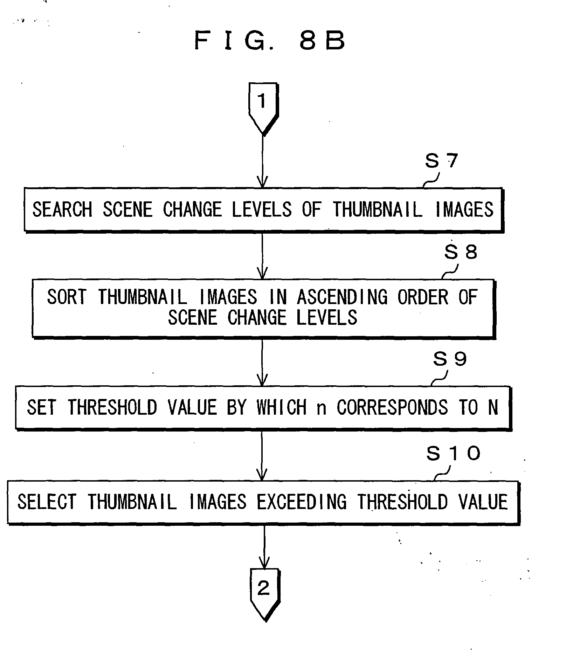

The following will be described on an example of image reproduction by the above apparatus 100 for reproducing the image as embodiments of a method for reproducing an image and a program for allowing a computer to execute the method according to the invention, with reference to flowcharts shown in Figs. 8A and 8B.

Suppose that the program for allowing a computer to execute an embodiment of the method for reproducing an image according to the invention is previously stored in the ROM 24c. The CPU 24a puts the program in motion to execute the method for reproducing the image so that an image recorded with brightness histogram difference between current and previous frames at each scene change point and the thumbnail images each for searching the scene change point can be reproduced.

Assuming the above, at Step S1 of the process in the flowchart shown in Fig. 8A, the time-length-determining device 2 determines a length of time T to display the thumbnail images on a screen corresponding to a frame length of the screen in which the video image is reproduced and displayed. The time-length-dividing device 5 divides the length of time T to determine the length of time "t".

At Step S2, the image-number-determining device 3 determines number N of the thumbnail images to be displayed during the section A divided so as to have the length of time "t". At Step S3, the thumbnail images recorded during the length of time "t" are extracted. At Step S4, if number n of the thumbnail images recorded during t minute(s) corresponds to the number N of the thumbnail images determined by the image-number-determining device 3, the process goes to Step S5 where the thumbnail images of the number N are displayed during the length of time "t" with each of them being synchronized with the video image. The process then goes to Step S6.

At Step S6, if an instruction for finishing the reproduction is supplied through the input unit 26, the reproduction of image finishes. If no reproduction is finished at Step S6, the process goes back to Step S3 where the thumbnail images recorded as the contents during next length of time "t" are extracted.

At Step S4, if number n of the thumbnail images recorded during t minute(s) do not correspond to number N of the thumbnail images determined by the image-number-determining device 3, the process goes to Step S7 of the flowchart shown in Fig. 8B.

At Step S7, the threshold-value-setting device 4 searches scene change levels corresponding to the thumbnail images recorded during the length of time "t". At Step S8, the thumbnail images the scene change levels of which are searched are sorted in ascending order of the scene change levels.

At Step S9, the threshold-value-setting device 4 sets a threshold value TA by which the number n of the thumbnail images recorded during t minute(s) correspond to the number N of thumbnail images to be displayed that is determined by the image-number-determining device 3. At Step S10, the thumbnail images Th1, Th2, and Th3 corresponding to the scene change levels D1, D2, and D3, respectively, that exceed the threshold value TA are selected and the process goes back to Step S5 of the flowchart shown in Fig. 8A.

At Step S5, the thumbnail images Th1, Th2, and Th3 of number N (in this case of three) are displayed during the length of time "t" with each of them being synchronized with the video image M1 and the process goes to Step S6.

At Step S6, if an instruction for finishing the reproduction is supplied through the input unit 26, the reproduction of image finishes. If no reproduction is finished at Step S6, the process goes back to Step S3 where the thumbnail images recorded as the contents during the section B that is next length of time "t" are extracted. The image reproduction process same as the one carried out in the above section A is carried out.

Thus, only the thumbnail images corresponding to the scene change points that exceed any of the threshold values TA and TB set according to a record situation of the contents at a point of time can be displayed with each of them being synchronized with the video image. This allows loads on display processing of the thumbnail images to decrease, as compared by a case where all the thumbnail images recorded are reproduced and displayed.

If CPU has a relatively low operation speed, it can reproduce and display the limited number of thumbnail images on a screen as index for searching the reproduction start point with each of them being synchronized with the video image. This allows to be presented an inexpensive apparatus for reproducing an image as compared by the past one.

It is also possible to set the threshold values TA and TB variably based on the length of time "t" when the thumbnail images are displayed. This allows a set number of thumbnail images to be reproduced and displayed with each of them being synchronized with the video image irrespective of unbalance of the numbers of scene change points. Thus, it allows unevenness in time to display the thumbnail images based on unbalance of the numbers of scene change points to decrease.

The invention has been described in detail with reference to specific embodiments and their excellent effect of the invention in the form of the apparatus 100 and the method for reproducing the image and the program for allowing a computer to execute the method. It should be understood by those skilled in the art that the invention is not limited to the embodiments and that the invention can be applied equally well to any other types of video reproduction apparatus for reproducing the image with each of the thumbnail images for searching the image being synchronized with the video image. While the foregoing specification has described preferred embodiment(s) of the present invention, those skilled in the art may make many modifications, combinations, sub-combinations and alterations to the preferred embodiment without departing from the invention claimed in the appended claims or the equivalents therefor. The appended claims therefore are intended to cover all such modifications, combinations, sub-combinations and alterations as fall within the true scope of the invention.

Thus, although in the above embodiments according to the invention, brightness histogram difference between current and previous frames has been used as the difference between adjacent frames, the difference between adjacent frames is not limited to such the brightness difference. It may be used as the difference between adjacent frames to detect difference of motion vector between adjacent frames using any well-known calculus of motion vector differences and set an optionally variable threshold value on the detected vector differences.

Although the above embodiments of the program according to the invention have been previously stored in the ROM 24c, recording medium on which the program is stored is not limited to the ROM 24c. The HDD 19 may store it. Further, the recording media 28, 29, 30 which can be inserted into the drive unit 27 may store it and read it out.

Further, although in the above embodiments according to the invention, the length of time T have corresponded to a horizontal frame length of the screen in which the video image is reproduced and displayed, it goes without saying that the length of time T may correspond to a vertical frame length of the screen so that no excellent effect of the embodiments according to this invention is changed.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

In embodiments, an apparatus reproduces an image recorded with difference between adjacent frames at a scene change point and scaled-down images for searching the scene change points. Time-length-determining device determines a length of time to display the scaled-down images corresponding to a frame length of a screen of the displaying device. Image-number-determining device determines number of the scaled-down images to be displayed during the length of time. Threshold-value-setting device sets a threshold value on the difference recorded during the length of time to allow to be extracted the number of the scaled-down images corresponding to the number determined by the image-number-determining device. Controlling device controls operations of displaying device to reproduce and display the scaled-down images corresponding to the scene change point and having at least the difference between adjacent frames of the threshold value set by the threshold-value-setting device with the scaled-down image being synchronized with each of the image.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An apparatus for reproducing an image, said image being recorded with difference between adjacent frames at a scene change point and a scaled-down image for searching the scene change point, said apparatus comprising:
time-length-determining device that determines a length of time to display the scaled-down image corresponding to a frame length of a screen that displaying device has;
image-number-determining device that determines number of the scaled-down image displayed during the length of time determined by the time-length-determining device;
threshold-value-setting device that sets a threshold value on the difference between the adjacent frames, said difference being recorded during the length of time to allow to be extracted the number of the scaled-down image corresponding to the number of the scaled-down image determined by the image-number-determining device; and
controlling device that controls operation of the displaying device to reproduce and display the scaled-down image corresponding to the scene change point with the scaled-down image being synchronized with the image, said scaled-down image having at least the difference between adjacent frames of the threshold value set by the threshold-value-setting device.

2. The apparatus according to Claim 1, wherein said threshold-value-setting device sets a threshold value on brightness difference between adjacent frames recorded as the difference between the adjacent frames.

3. The apparatus according to Claim 1, further comprising time-length-dividing device that divides the length of time determined by the time-length-determining device,
wherein the image-number-determining device determines number of the scaled-down image displayed during the length of time divided by the time-length-dividing device; and
wherein threshold-value-setting device sets a threshold value on the difference between the adjacent frames, said difference being recorded during the length of time divided by the time-length-dividing device.

4. A method for reproducing an image, said image being recorded with difference between adjacent frames at a scene change point and a scaled-down image for searching the scene change point, said method comprising the steps of:
determining a length of time to display the scaled-down image corresponding to a frame length of the screen in which the image is reproduced and displayed;
determining number of the scaled-down image displayed during the determined length of time;
setting a threshold value on the difference between the adjacent frames, said difference being recorded during the length of time to allow to be extracted the number of the scaled-down image corresponding to the determined number of the scaled-down image; and
reproducing and displaying the scaled-down image corresponding to the scene change point with the scaled-down image being synchronized with the image, said scaled-down image having at least the difference between adjacent frames of the set threshold value.

5. The method according to Claim 4, wherein when setting a threshold value on the difference between the adjacent frames, said difference being recorded during the length of time to allow to be extracted the number of the scaled-down image corresponding to the determined number of the scaled-down image, a threshold value is set on brightness difference between adjacent frames recorded as the difference between the adjacent frames.

6. The method according to Claim 4, further the steps of:
after determining a length of time to display the scaled-down image corresponding to a frame length of the screen in which the image is reproduced and displayed, dividing the determined length of time; and
determining number of the scaled-down images displayed during the divided length of time.

7. A computer program product for allowing a computer to execute a method for reproducing an image, said image being recorded with difference between adjacent frames at a scene change point and a scaled-down image for searching the scene change point, said method comprising the steps of:
determining a length of time to display the scaled-down image corresponding to a frame length of the screen in which the image is reproduced and displayed;
determining number of the scaled-down image displayed during the determined length of time;
setting a threshold value on the difference between the adjacent frames, said difference being recorded during the length of time to allow to be extracted the number of the scaled-down image corresponding to the determined number of the scaled-down image; and
reproducing and displaying the scaled-down image corresponding to the scene change point with the scaled-down image being synchronized with the image, said scaled-down image having at least the difference between adjacent frames of the set threshold value.
